(19) **Europäisches Patentamt / European Patent Office / Office européen des brevets**

(11) **EP 4 593 038 A1**

(12) # EUROPEAN PATENT APPLICATION
published in accordance with Art. 153(4) EPC

(43) Date of publication:
**30.07.2025 Bulletin 2025/31**

(21) Application number: **23867881.7**

(22) Date of filing: **19.07.2023**

(51) International Patent Classification (IPC):
**H01B 1/06** $^{(2006.01)}$    **C01G 23/00** $^{(2006.01)}$
**H01M 4/36** $^{(2006.01)}$    **H01M 10/052** $^{(2010.01)}$

(52) Cooperative Patent Classification (CPC):
**H01M 10/0525; C01G 23/002; H01B 1/06;**
**H01M 4/366; H01M 4/62; H01M 10/056;**
**H01M 10/0561; H01M 50/431; H01M 50/46;**
C01P 2002/74; H01M 2300/008; Y02E 60/10

(86) International application number:
**PCT/JP2023/026472**

(87) International publication number:
**WO 2024/062755 (28.03.2024 Gazette 2024/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.09.2022 JP 2022150101**

(71) Applicant: **Panasonic Intellectual Property Management Co., Ltd.**
**Kadoma-shi, Osaka 571-0057 (JP)**

(72) Inventors:
• **SAGARA, Akihiko**
  **Kadoma-shi, Osaka 571-0057 (JP)**
• **NAKAMA,Yoshimasa**
  **Kadoma-shi, Osaka 571-0057 (JP)**

(74) Representative: **Novagraaf International SA**
**Chemin de l'Echo 3**
**1213 Onex, Geneva (CH)**

(54) **SOLID ELECTROLYTE, ELECTRODE MATERIAL, LITHIUM-ION BATTERY, AND METHOD FOR PRODUCING SOLID ELECTROLYTE**

(57)    A solid electrolyte 10 according to the present disclosure includes Li, Ti, M, and F. The M is at least one selected from the group consisting of Mg, Ca, Sr, Ba, Sc, Y, Al, Ga, In, Zr, and Sn. In an X-ray diffraction pattern obtained by X-ray diffraction measurement using Cu K$\alpha$ radiation, a ratio of an intensity of a peak present in a diffraction angle $2\theta$ range from 40° to 43° to an intensity of a peak present in a diffraction angle $2\theta$ range from 19° to 23° is 1.0 or more and 3.3 or less.

FIG.1

EP 4 593 038 A1

**Description**

TECHNICAL FIELD

The present disclosure relates to a solid electrolyte, an electrode material, a lithium secondary battery, and a method for producing a solid electrolyte.

BACKGROUND ART

Patent Literature 1 discloses a solid electrolyte material including Li, Ti, M, and F. M is at least one selected from the group consisting of Al and Y. Patent Literature 1 discloses that a solid electrolyte material including fluorine has excellent oxidation resistance.

CITATION LIST

Patent Literature

Patent Literature 1: WO 2021/186809

SUMMARY OF INVENTION

Technical Problem

In conventional arts, there has been a demand to improve the ionic conductivity of a solid electrolyte including fluorine.

Solution to Problem

The present disclosure provides a solid electrolyte including Li, Ti, M, and F, wherein

the M is at least one selected from the group consisting of Mg, Ca, Sr, Ba, Sc, Y, Al, Ga, In, Zr, and Sn, and
in an X-ray diffraction pattern obtained by X-ray diffraction measurement using Cu K$\alpha$ radiation, a ratio of an intensity of a peak present in a diffraction angle $2\theta$ range from 40° to 43° to an intensity of a peak present in a diffraction angle $2\theta$ range from 19° to 23° is 1.0 or more and 3.3 or less.

Advantageous Effects of Invention

According to the present disclosure, the ionic conductivity of a solid electrolyte including fluorine can be improved.

BRIEF DESCRIPTION OF DRAWINGS

FIG. 1 is a diagram showing a solid electrolyte according to Embodiment 1.
FIG. 2 is a process diagram showing a method for producing a solid electrolyte.
FIG. 3 is a cross-sectional view schematically showing the configuration of an electrode material according to Embodiment 2.
FIG. 4 is a cross-sectional view schematically showing the configuration of a battery according to Embodiment 3.
FIG. 5 is a cross-sectional view of a lithium secondary battery according to Embodiment 4.
FIG. 6 is a schematic diagram of a pressure-molding die used for measuring ionic conductivity.
FIG. 7 is a graph showing the X-ray diffraction patterns of solid electrolytes of examples and a comparative example.
FIG. 8 is a graph showing the relationship between a ratio $I_2/I_1$ and ionic conductivity.

DESCRIPTION OF EMBODIMENTS

Embodiments of the present disclosure are described below with reference to the drawings. The present disclosure is not limited to the following embodiments.

(Embodiment 1)

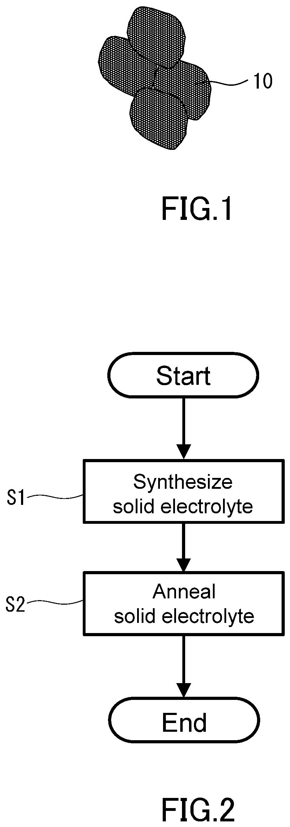

FIG. 1 shows a solid electrolyte 10 according to Embodiment 1. The solid electrolyte 10 includes Li, Ti, M, and F. M is at least one selected from the group consisting of Mg, Ca, Sr, Ba, Sc, Y, Al, Ga, In, Zr, and Sn. In the X-ray diffraction pattern obtained by X-ray diffraction measurement using Cu K$\alpha$ radiation, the ratio of an intensity $I_2$ of a peak present in a diffraction angle $2\theta$ range from 40° to 43° to an intensity $I_1$ of a peak present in a diffraction angle $2\theta$ range from 19° to 23°, $I_2/I_1$, is 1.0 or more and 3.3 or less. The intensities $I_1$ and $I_2$ of the peaks represent relative intensities.

The solid electrolyte 10 includes F, and accordingly has high oxidation resistance. This is because F has high oxidation-reduction potential. Meanwhile, F has high electronegativity, and accordingly the bond between F and Li is relatively strong. Consequently, conventional solid electrolytes including Li and F tend to have low ionic conductivity. In contrast, in the solid electrolyte 10 of the present embodiment, the ratio $I_2/I_1$ of the intensities of the peaks in the X-ray diffraction pattern is 1.0 or more and 3.3 or less. Therefore, the solid electrolyte 10 exhibits higher ionic conductivity than conventional solid electrolytes including Li, Ti, M, and F. The ratio $I_2/I_1$ of the intensities of the peaks is increased by performing long-time annealing during the manufacturing process of the solid electrolyte 10.

The peak present in the diffraction angle $2\theta$ range from 19° to 23° is presumed to be a peak attributed to the orthorhombic crystal system. The peak present in the diffraction angle $2\theta$ range from 40° to 43° is presumed to be a peak attributed to the trigonal crystal system. It is presumed that, through long-time annealing, the contribution of the trigonal crystal structure increases relative to the contribution of the orthorhombic crystal structure, resulting in an improvement in ionic conductivity. As the crystal structure of the solid electrolyte 10 approaches a single phase of the trigonal crystal system, the ratio $I_2/I_1$ approaches the upper limit value of 3.3. The ratio $I_2/I_1$ of the intensities of the peaks may be 1.8 or more and 3.0 or less.

The peak present in the diffraction angle $2\theta$ range from 19° to 23° means a peak having the maximum intensity present in the range. The peak present in the diffraction angle $2\theta$ range from 40° to 43° means a peak having the maximum intensity present in the range.

M may be at least one selected from the group consisting of Mg, Ca, Zr, and Al. These elements are suitable as elements for improving the ionic conductivity of the solid electrolyte 10.

M is typically Al. Al is inexpensive and is particularly suitable as an element for improving the ionic conductivity of the solid electrolyte 10.

The solid electrolyte 10 is desirably free of sulfur. A solid electrolyte that is free of sulfur does not generate hydrogen sulfide when exposed to the atmosphere, and is accordingly excellent in safety.

To enhance the ionic conductivity, the solid electrolyte 10 may include an anion other than F. The anion other than F is at least one selected from the group consisting of Cl, Br, I, O, and Se.

The solid electrolyte 10 may consist substantially of Li, Ti, M, and F. Here, "the solid electrolyte 10 consists substantially of Li, Ti, M, and F" means that the molar ratio (i.e., mole fraction) of the sum of the amounts of substance of Li, Ti, M, and F to the total of the amounts of substance of all the elements constituting the solid electrolyte 10 is 90% or more. In one example, the molar ratio may be 95% or more. The solid electrolyte 10 may consist of Li, Ti, M, and F.

However, the solid electrolyte 10 may include an element unavoidably incorporated. Examples of the element include hydrogen, oxygen, and nitrogen. Such an element is included in the raw material powder of the solid electrolyte 10 or present in an atmosphere for producing and storing the solid electrolyte 10.

To further enhance the ionic conductivity of the solid electrolyte 10, the ratio of the amount of substance of Li to the sum of the amounts of substance of Ti and M may be 1.7 or more and 4.2 or less.

The solid electrolyte 10 has a composition, for example, represented by the following formula (1). The formula (1) satisfies $0 < x < 1$ and $0 < b \leq 2$. In the case where the solid electrolyte 10 has the composition represented by the following formula (1), the solid electrolyte 10 exhibits favorable ionic conductivity.

$$Li_{6-(4-x)b}(Ti_{1-x}M_x)_bF_6 \qquad \text{Formula (1)}$$

To enhance the ionic conductivity of the solid electrolyte 10, the formula (1) may satisfy $0.1 \leq x \leq 0.9$.

To enhance the ionic conductivity of the solid electrolyte 10, the formula (1) may satisfy $0.8 \leq b \leq 1.2$.

As can be understood from the appearance of a peak in the X-ray diffraction pattern, the solid electrolyte 10 has a crystalline phase. However, the solid electrolyte 10 may include an amorphous phase.

The shape of the solid electrolyte 10 is not particularly limited. The solid electrolyte 10 may have a particle shape. Examples of particle shapes include acicular, spherical, and ellipsoidal shapes. The solid electrolyte 10 may have a pellet, plate, or thin-film shape.

In the case where the solid electrolyte 10 is particulate, the particle of the solid electrolyte 10 may have a median diameter of 0.01 $\mu$m or more and 100 $\mu$m or less. In this case, the solid electrolyte 10 exhibits higher ionic conductivity. Furthermore, in the case where the solid electrolyte 10 is mixed with a different material such as an active material, a well-dispersed state of the solid electrolyte 10 and the different material is achieved. The "median diameter" means the particle diameter at which the cumulative volume equals 50% in a volumetric particle size distribution. The volumetric particle size distribution is measured, for example, using a laser diffraction particle size analyzer.

Next, a method for producing the solid electrolyte 10 is described. FIG. 2 is a process diagram showing a method for producing a solid electrolyte.

In Step S1, a solid electrolyte is synthesized. First, raw material powders are mixed so as to obtain a solid electrolyte having a target composition. The raw material powders are, for example, fluorides of elements. For example, in the case where the target composition is $Li_{2.7}Ti_{0.3}Al_{0.7}F_6$, LiF, $TiF_4$, and $AlF_3$ are mixed in a molar ratio of 2.7:0.3:0.7. The raw material powders are then reacted with each other using a mixer, such as a planetary ball mill. That is, the raw material powders are reacted with each other by mechanochemical milling. Thus, a solid electrolyte having the target composition is obtained.

Next, in Step S2, the solid electrolyte obtained is annealed. The annealing is performed under the conditions of 100°C or more and 10 hours or more. Thus, the solid electrolyte 10 of the present embodiment is obtained. Annealing at an appropriate temperature for a long time increases the ratio $I_2/I_1$ of the intensities of the peaks. Consequently, the ionic conductivity of the solid electrolyte 10 is improved.

The upper limit value for the annealing temperature is not particularly limited and is, for example, 270°C. The upper limit value for the annealing time is not particularly limited and is, for example, 1000 hours. The annealing conditions are desirably 120°C or more and 250°C or less and 10 hours or more and 200 hours or less. The atmosphere during the annealing may be an air atmosphere or an inert atmosphere. Examples of inert atmospheres include a nitrogen gas atmosphere and a noble gas atmosphere.

Before the annealing or after the annealing, a process for pulverizing the solid electrolyte 10 may be performed. In this process, the solid electrolyte 10 is pulverized, for example, to have a median diameter on the order of nanometers.

(Embodiment 2)

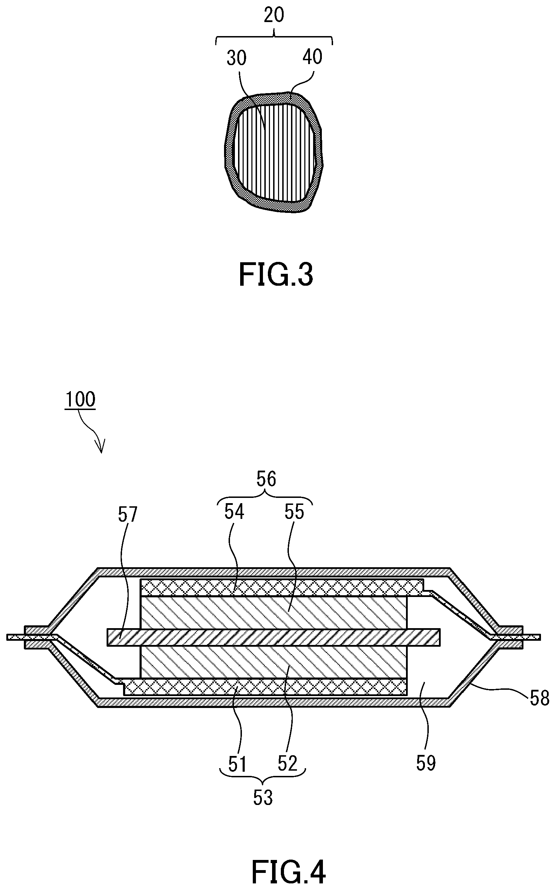

FIG. 3 is a cross-sectional view of an electrode material 20 according to Embodiment 2. The electrode material 20 includes an active material 30 and a coating layer 40. The coating layer 40 coats at least a portion of the surface of a particle of the active material 30. The active material 30 can be a secondary particle formed by aggregation of a plurality of primary particles. The coating layer 40 can coat at least a portion of the surface of the secondary particle of the active material 30. The coating layer 40 includes the solid electrolyte 10 of Embodiment 1. In the case where the active material 30 is coated with the solid electrolyte 10, direct contact between the active material 30 and a different material such as an electrolyte solution is inhibited. This can suppress, for example, the decomposition of the different material such as an electrolyte solution.

The coating layer 40 may coat only a portion of the surface of the particle of the active material 30. In this case, the particles of the active material 30 are in direct contact with each other through the portions that are not coated with the coating layer 40, thereby ensuring the electronic conductivity between the particles of the active material 30. However, the coating layer 40 may uniformly coat the surface of the particle of the active material 30.

The coating layer 40 may include the solid electrolyte 10 as the main component or may include only the solid electrolyte 10. The "main component" refers to a component having the highest mass content. "Include only the solid electrolyte 10" means that no materials other than the solid electrolyte 10 are intentionally added, except for unavoidable impurities.

The active material 30 is, for example, a positive electrode active material. In the case where the electrode material 20 is used for the positive electrode of a nonaqueous electrolyte secondary battery, the decomposition of the electrolyte solution in the positive electrode can be suppressed. Therefore, a higher-output active material can be used for the positive electrode.

In the case where the electrode material 20 is used for the positive electrode of a solid-state battery, a second solid electrolyte different in composition from the solid electrolyte 10 is added in the positive electrode. In this case, direct contact between the active material 30 and the second solid electrolyte is inhibited, and consequently the decomposition of the second solid electrolyte can be suppressed. Examples of the second solid electrolyte include a halide solid electrolyte, a sulfide solid electrolyte, a polymer solid electrolyte, and a complex hydride solid electrolyte. Examples of sulfide solid electrolytes include $Li_2S\text{-}P_2S_5$, $Li_2S\text{-}SiS_2$, $Li_2S\text{-}B_2S_3$, $Li_2S\text{-}GeS_2$, $Li_{3.25}Ge_{0.25}P_{0.75}S_4$, and $Li_{10}GeP_2S_{12}$. Examples of polymer solid electrolytes include a compound of a polymer compound having an ethylene oxide structure and a lithium salt. As the lithium salt, for example, at least one selected from the group consisting of $LiPF_6$, $LiBF_4$, $LiSbF_6$, $LiAsF_6$, $LiSO_3CF_3$, $LiN(SO_2CF_3)_2$, $LiN(SO_2C_2F_5)_2$, $LiN(SO_2CF_3)(SO_2C_4F_9)$, and $LiC(SO_2CF_3)_3$ can be used. Examples of complex hydride solid electrolytes include $LiBH_4\text{-}LiI$ and $LiBH_4\text{-}P_2S_5$. Examples of halide solid electrolytes include $Li_3YX_6$, $Li_2MgX_4$, $Li_2FeX_4$, $Li(Al,Ga,In)X_4$, and $Li_3(Al,Ga,In)X_6$. "X" is a halogen element. "(Al,Ga,In)" means at least one selected from the group consisting of Al, Ga, and In. One or a combination of two or more selected from these solid electrolytes can be used as the second solid electrolyte.

The active material 30 includes a material having properties of occluding and releasing metal ions, such as lithium ions.

In the case where the active material 30 is a positive electrode active material, a lithium-containing transition metal oxide, a lithium-containing transition metal phosphate, a transition metal fluoride, a polyanion material, a fluorinated polyanion material, a transition metal sulfide, a transition metal oxysulfide, a transition metal oxynitride, or the like can be used as the active material 30. In particular, in the case where a lithium-containing transition metal oxide or a lithium-containing transition metal phosphate is used as the active material 30, it is possible to reduce the manufacturing cost of a battery and enhance the average discharge voltage. Examples of lithium-containing transition metal oxides include lithium cobalt oxide, lithium nickel cobalt aluminum oxide, lithium nickel cobalt manganese oxide, and lithium nickel manganese oxide. Examples of lithium-containing transition metal phosphates include lithium iron phosphate, lithium vanadium phosphate, lithium cobalt phosphate, and lithium nickel phosphate.

The active material 30 may be a negative electrode active material. Examples of the negative electrode active material include lithium titanate, graphite, silicon, silicon compounds, and NiBi alloys.

The active material 30 has, for example, a particle shape. The particle shape of the active material 30 is not particularly limited. The particle shape of the active material 30 can be a spherical, ellipsoidal, flaky, or fibrous shape.

The electrode material 20 can be produced by the following method.

A powder of the active material 30 and the powder of the solid electrolyte 10 are mixed in an appropriate ratio to obtain a mixture. The mixture is subjected to a milling process to impart mechanical energy to the mixture. For the milling process, a mixer, such as a ball mill, can be used. To suppress oxidation of the material, the milling process may be performed in a dry atmosphere and an inert atmosphere.

The electrode material 20 may be produced by a dry particle composing method. Processing using the dry particle composing method includes imparting mechanical energy generated by at least one selected from the group consisting of impact, compression, and shear to the active material 30 and the solid electrolyte 10. The active material 30 and the solid electrolyte 10 are mixed in an appropriate ratio.

The device used in producing the electrode material 20 is not particularly limited and can be a device capable of imparting mechanical energy generated by impact, compression, and shear to the mixture of the active material 30 and the solid electrolyte 10. Examples of devices capable of imparting mechanical energy include ball mills and processing devices (particle composing machines), such as "MECHANO FUSION" (manufactured by Hosokawa Micron Corporation), "NOBILTA" (manufactured by Hosokawa Micron Corporation), and "BALANCE GRAN" (manufactured by Freund-Turbo Corporation). The electrode material 20 may be produced by a liquid phase method, such as a sol-gel method.

The annealing process (Step S2) described with reference to FIG. 2 may be performed with the unannealed solid electrolyte being adhered to the surface of the particle of the active material 30.

A second coating layer may be present between the active material 30 and the coating layer 40. The second coating layer can be formed of an oxide solid electrolyte, such as LISICON or lithium niobate.

It is not required that the solid electrolyte 10 be used as a coating material for the active material 30. The solid electrolyte 10 may be used for the electrolyte layer of a solid-state battery.

(Embodiment 3)

FIG. 4 is a cross-sectional view of a lithium secondary battery 100 according to Embodiment 3. The lithium secondary battery 100 includes a positive electrode 53, a negative electrode 56, an electrolyte layer 57, an exterior 58, and a nonaqueous electrolyte solution 59. The positive electrode 53 includes a positive electrode current collector 51 and a positive electrode active material layer 52. The positive electrode active material layer 52 is provided on the positive electrode current collector 51. The negative electrode 56 includes a negative electrode current collector 54 and a negative electrode active material layer 55. The negative electrode active material layer 55 is provided on the negative electrode current collector 54. The electrolyte layer 57 is disposed between the positive electrode 53 and the negative electrode 56. The electrolyte layer 57 is a separator. The positive electrode 53, the negative electrode 56, the electrolyte layer 57, and the nonaqueous electrolyte solution 59 are housed in the exterior 58.

The positive electrode 53 or the negative electrode 56 includes the electrode material 20 of Embodiment 2. Specifically, the positive electrode active material layer 52 or the negative electrode active material layer 55 includes the electrode material 20 of Embodiment 2. Accordingly, in the positive electrode 53 or the negative electrode 56, the decomposition of a different material such as the nonaqueous electrolyte solution 59 is suppressed. Consequently, the performance of the lithium secondary battery 100, such as the cycle life, is improved.

The electrode material 20 is typically included in the positive electrode 53. Consequently, the decomposition of the nonaqueous electrolyte solution 59 in the positive electrode 53 can be suppressed.

The positive electrode current collector 51 is, for example, a foil made of a metal material such as aluminum, stainless steel, titanium, or an alloy thereof. The negative electrode current collector 54 is, for example, a foil made of a metal material such as stainless steel, nickel, copper, or an alloy thereof.

The positive electrode active material layer 52 and the negative electrode active material layer 54 may include a conductive additive, an ion conductor, a binder, and the like.

The nonaqueous electrolyte solution 59 is impregnated in the positive electrode 53, the negative electrode 56, and the electrolyte layer 57. The nonaqueous electrolyte solution 59 may fill the interior space of the exterior 58.

The nonaqueous electrolyte solution 59 includes a nonaqueous solvent and a lithium salt.

As the nonaqueous solvent, a cyclic carbonate ester, a linear carbonate ester, an ester, a cyclic ether, a linear ether, a nitrile, an amide, or the like can be used. One or a combination of two or more selected from these solvents may be used.

As the lithium salt, lithium hexafluorophosphate (LiPF$_6$), lithium tetrafluoroborate (LiBF$_4$), lithium perchlorate (LiClO$_4$), lithium bis(fluorosulfonyl)imide (LiFSI), lithium bis(trifluoromethanesulfonyl)imide (LiTFSI), lithium bisperfluoroethylsulfonyl imide (LiN(SO$_2$C$_2$F$_5$)$_2$), LiAsF$_6$, LiCF$_3$SO$_3$, lithium difluoro(oxalato)borate, or the like can be used. One or a combination of two or more selected from these electrolyte salts may be used.

The electrolyte layer 57 has lithium-ion conductivity. The material of the electrolyte layer 57 is not particularly limited as long as the passage of lithium ions therethrough is allowed. The material of the electrolyte layer 57 can be at least one selected from the group consisting of a solid electrolyte, a gel electrolyte, an ion exchange resin membrane, such as a lithium cation exchange resin, a semipermeable membrane, and a porous membrane. In the case where the electrolyte layer 57 is formed of any of these materials, the safety of the lithium secondary battery 100 can be sufficiently ensured. Examples of the solid electrolyte include sulfide solid electrolytes, such as Li$_2$S-P$_2$S$_5$, and oxide solid electrolytes, such as Li$_7$La$_3$Zr$_2$O$_{12}$ (LLZ). Examples of the gel electrolyte include gel electrolytes including a fluororesin, such as PVdF. Examples of the ion exchange resin membrane include cation exchange membranes and anion exchange membranes. Examples of the porous membrane include porous membranes made of a polyolefin resin and porous membranes formed from glass paper obtained by weaving glass fibers into a nonwoven fabric. The electrolyte layer 57 has a thickness of, for example, 0.001 μm or more and 500 μm or less.

The solid electrolyte 10 of Embodiment 1 may be used as the solid electrolyte of the electrolyte layer 57.

The shape of the lithium secondary battery 100 is not particularly limited. Various shapes such as a coin type, a cylindrical type, a prismatic type, a sheet type, a button type, a flat type, and a stacked type can be employed as the shape of the lithium secondary battery 100.

(Embodiment 4)

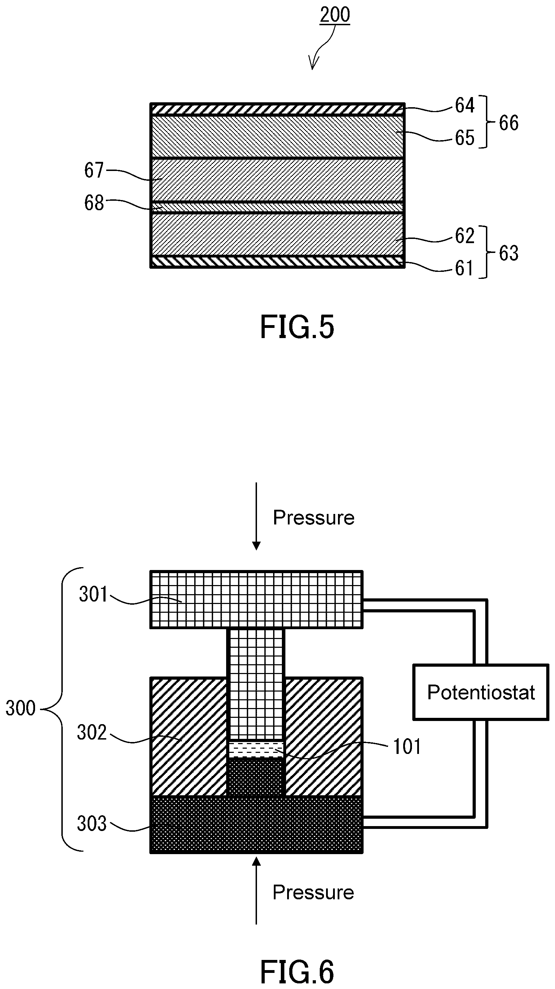

FIG. 5 is a cross-sectional view of a lithium secondary battery 200 according to Embodiment 4. The lithium secondary battery 200 includes a positive electrode 63, a coating layer 68, an electrolyte layer 67, and a negative electrode 66 in this order. The electrolyte layer 67 is disposed between the positive electrode 63 and the negative electrode 66. The positive electrode 63 includes a positive electrode current collector 61 and a positive electrode active material layer 62. The negative electrode 66 includes a negative electrode current collector 64 and a negative electrode active material layer 65. The coating layer 68 is a layer including the solid electrolyte 10 of Embodiment 1, and is disposed between the positive electrode active material layer 62 and the electrolyte layer 67 to coat the surface of the positive electrode active material layer 62. Specifically, the coating layer 68 is disposed on the surface of the positive electrode active material layer 62 and is in contact with both the positive electrode active material layer 62 and the electrolyte layer 67.

The coating layer 68 may include a binder. As the binder, the same material as the material usable for the positive electrode active material layer 62 and the negative electrode active material layer 65 can be used. The coating layer 68 has a thickness of, for example, 0.001 μm or more and 100 μm or less.

The electrolyte layer 67 can be a layer including the second solid electrolyte. In the case where the electrolyte layer 67 includes the second solid electrolyte, the sum of the thickness of the coating layer 68 and the thickness of the electrolyte layer 67 is, for example, 0.002 μm or more and 500 μm or less. According to the present embodiment, the effect of suppressing the decomposition of the second solid electrolyte is obtained in addition to the improvement in ionic conductivity.

The position of the coating layer 68 is not limited to the position shown in FIG. 5. The coating layer 68 may be additionally provided between the electrolyte layer 67 and the negative electrode active material layer 65. The coating layer 68 may be disposed on the surface of the negative electrode active material layer 65. Alternatively, the coating layer 68 may be disposed only between the electrolyte layer 67 and the negative electrode active material layer 65. The coating layer 68 may be disposed on the surface of at least one of the positive electrode active material layer 62 and the negative electrode active material layer 65.

The constituent materials of the lithium secondary battery 200 are as described in Embodiment 3. The lithium secondary battery 200 may be a solid-state battery in which a liquid electrolyte is not used, or may be a secondary battery as described in Embodiment 3, in which a nonaqueous electrolyte is used.

(Other embodiments)

(Supplementary description)

The above description of the embodiments discloses the following techniques.

(Technique 1)

A solid electrolyte including Li, Ti, M, and F, wherein

the M is at least one selected from the group consisting of Mg, Ca, Sr, Ba, Sc, Y, Al, Ga, In, Zr, and Sn, and
in an X-ray diffraction pattern obtained by X-ray diffraction measurement using Cu K$\alpha$ radiation, a ratio of an intensity of a peak present in a diffraction angle $2\theta$ range from 40° to 43° to an intensity of a peak present in a diffraction angle $2\theta$ range from 19° to 23° is 1.0 or more and 3.3 or less.

This configuration can improve the ionic conductivity of a solid electrolyte including fluorine.

(Technique 2)

The solid electrolyte according to Technique 1, wherein the M is at least one selected from the group consisting of Mg, Ca, Zr, and Al. These elements are suitable as elements for improving the ionic conductivity of the solid electrolyte.

(Technique 3)

The solid electrolyte according to Technique 1, wherein the M is Al. Al is inexpensive and is particularly suitable as an element for improving the ionic conductivity of the solid electrolyte.

(Technique 4)

The solid electrolyte according to Technique 1, wherein the solid electrolyte has a composition represented by the following formula (1). The formula (1) satisfies $0 < x < 1$ and $0 < b \leq 2$. With this configuration, the solid electrolyte exhibits favorable ionic conductivity.

$$Li_{6-(4-x)b}(Ti_{1-x}M_x)_bF_6 \qquad \text{Formula (1)}$$

(Technique 5)

An electrode material including:

an active material; and
a coating layer coating at least a portion of a surface of a particle of the active material, wherein
the coating layer includes the solid electrolyte according to any one of Techniques 1 to 4.

This configuration inhibits direct contact between the active material and a different material such as an electrolyte solution. This can suppress, for example, the decomposition of the different material such as an electrolyte solution.

(Technique 6)

A lithium secondary battery including:

a positive electrode;
a negative electrode; and
an electrolyte layer disposed between the positive electrode and the negative electrode, wherein
the positive electrode or the negative electrode includes the electrode material according to Technique 5.

This configuration improves the performance of a lithium secondary battery, such as the cycle life.

(Technique 7)

A method for producing a solid electrolyte, the method including:

synthesizing a solid electrolyte including Li, Ti, M, and F; and
annealing the solid electrolyte under conditions of 100°C or more and 10 hours or more, wherein
the M is at least one selected from the group consisting of Mg, Ca, Sr, Ba, Sc, Y, Al, Ga, In, Zr, and Sn.

This configuration can improve the ionic conductivity of a solid electrolyte including fluorine.

Examples

(Comparative Example 1)

In an argon atmosphere with a dew point of -60°C or less, the raw material powders LiF, $TiF_4$, and $AlF_3$ were weighed in a molar ratio of $LiF:TiF_4:AlF_3 = 2.7:0.3:0.7$. These were pulverized and mixed in a mortar to obtain the mixture. The mixture was then subjected to a milling process using $\varphi$5-mm zirconia balls and a planetary ball mill (Model P-7 manufactured by Fritsch GmbH) under the conditions of 12 hours and 500 rpm. Thus, a solid electrolyte in powder form having a composition of $Li_{2.7}Ti_{0.3}Al_{0.7}F_6$ was obtained.

(Example 1)

The solid electrolyte of Comparative Example 1 was placed in a sealed container and annealed under the conditions of 125°C (ambient temperature), an air atmosphere, and 40 hours. Thus, the solid electrolyte of Example 1 was obtained.

(Example 2)

The solid electrolyte of Comparative Example 1 was placed in a sealed container and annealed under the conditions of 150°C (ambient temperature), an air atmosphere, and 90 hours. Thus, the solid electrolyte of Example 2 was obtained.

[Ionic conductivity measurement]

FIG. 6 is a schematic diagram showing a pressure-molding die 300 used for measuring the ionic conductivity of the solid electrolytes. The pressure-molding die 300 included an upper punch 301, a die frame 302, and a lower punch 303. The upper punch 301 and the lower punch 303 were made of stainless steel. The die frame 302 was made of polycarbonate.

In a dry atmosphere with a dew point of -60°C or less, the pressure-molding die 300 was filled with a powder 101 of the solid electrolyte. A pressure of 400 MPa was applied to the powder 101 of the solid electrolyte using the upper punch 301 and the lower punch 303.

With the pressure applied, the upper punch 301 and the lower punch 303 were connected to a potentiostat (VersaSTAT4 manufactured by Princeton Applied Research) equipped with a frequency response analyzer. The upper punch 301 was connected to the working electrode and the potential measurement terminal. The lower punch 303 was connected to the counter electrode and the reference electrode. The impedance of the solid electrolyte was measured by electrochemical impedance measurement at 25°C and -40°C.

In a Cole-Cole plot obtained by the impedance measurement, the real part of the complex impedance at the measurement point where the absolute value of the phase of the complex impedance was the smallest was regarded as the resistance value of the solid electrolyte to ionic conduction. This resistance value was used to calculate the ionic conductivity by the following equation (2). The results are shown in Table 1.

$$\sigma = (R_{SE} \times S/t)^{-1} \quad (2)$$

In the equation (2), $\sigma$ represents the ionic conductivity; S represents the contact area between the solid electrolyte and the upper punch 301, and in FIG. 6, S is equal to the cross-sectional area of the cavity of the die frame 302; $R_{SE}$ represents the resistance value of the solid electrolyte in the impedance measurement; and t represents the thickness of the solid electrolyte, and in FIG. 6, t represents the thickness of the layer of the powder 101 of the solid electrolyte.

[X-ray diffraction measurement]

Powder X-ray diffraction measurement was performed on the solid electrolytes of Comparative Example 1, Example 1, and Example 2. For the X-ray diffraction measurement, a powder X-ray diffractometer (MiniFlex 600 manufactured by Rigaku Corporation) was used.

The measurement was performed by the $\theta$-$2\theta$ method using Cu-K$\alpha$ radiation (wavelengths of 1.5405 Å and 1.5444 Å) as the X-ray source. The measurement angle interval was set to 0.01°. The divergence angle of the divergence slit was set to 0.25°. The slit width of the length limiting slit was set to 5 mm.

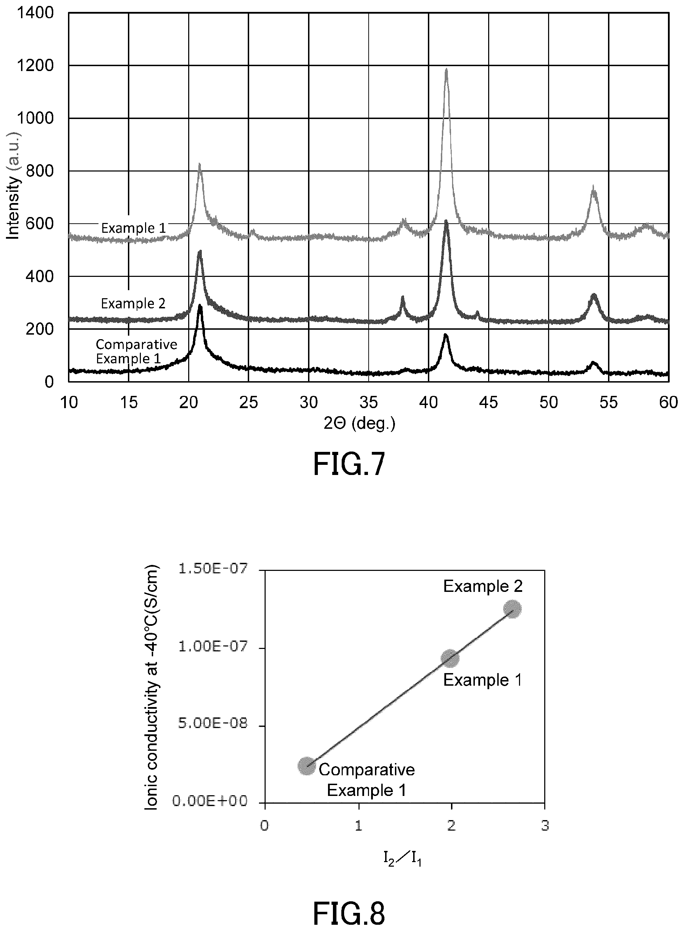

FIG. 7 shows the X-ray diffraction patterns obtained by the X-ray diffraction measurement. The ratio $I_2/I_1$ of the intensity $I_2$ of a peak present in the diffraction angle $2\theta$ range from 40° to 43° to the intensity $I_1$ of a peak present in the diffraction angle $2\theta$ range from 19° to 23° was calculated. A Gauss-Lorentz composite function was used for fitting each peak. The results are shown in Table 1.

[Table 1]

| | Annealing conditions | Ionic conductivity at 25°C (S/cm) | Ionic conductivity at -40°C (S/cm) | Ratio $I_2/I_1$ |
|---|---|---|---|---|
| Comparative Example 1 | - | $1.0 \times 10^{-5}$ | $2.4 \times 10^{-8}$ | 0.45 |
| Example 1 | 125°C 40 hours | $1.5 \times 10^{-5}$ | $9.3 \times 10^{-8}$ | 1.99 |
| Example 2 | 150°C 90 hours | $1.5 \times 10^{-5}$ | $1.3 \times 10^{-7}$ | 2.66 |

The ionic conductivity of the solid electrolyte of Example 2 at 25°C was approximately 1.5 times the ionic conductivity of the solid electrolyte of Comparative Example 1 at 25°C. Furthermore, the order of the ionic conductivity of the solid electrolyte of Example 2 at -40°C was one order of magnitude higher than the order of the ionic conductivity of the solid electrolyte of Comparative Example 1 at -40°C.

FIG. 8 is a graph showing the relationship between the ratio $I_2/I_1$ and ionic conductivity at -40°C. In the solid electrolyte of Comparative Example 1, the ratio $I_2/I_1$ was 0.45. In the solid electrolyte of Example 1, the ratio $I_2/I_1$ was 1.99. In the solid electrolyte of Example 2, the ratio $I_2/I_1$ was 2.66. As can be understood from these results, the ratio $I_2/I_1$ increased as the annealing time increased.

It is presumed that, even in the case where the metal M included in a solid electrolyte is a metal other than Al, the solid electrolyte exhibits the same tendency as the solid electrolytes of Examples 1 and 2 provided that, for example, the ionic radius of the metal M is close to the ionic radius of Al. Examples of the metal M as described above include Ca, Mg, and Zr.

INDUSTRIAL APPLICABILITY

The technique of the present disclosure is useful for lithium secondary batteries.

**Claims**

1. A solid electrolyte comprising Li, Ti, M, and F, wherein

   the M is at least one selected from the group consisting of Mg, Ca, Sr, Ba, Sc, Y, Al, Ga, In, Zr, and Sn, and
   in an X-ray diffraction pattern obtained by X-ray diffraction measurement using Cu K$\alpha$ radiation, a ratio of an intensity of a peak present in a diffraction angle $2\theta$ range from 40° to 43° to an intensity of a peak present in a diffraction angle $2\theta$ range from 19° to 23° is 1.0 or more and 3.3 or less.

2. The solid electrolyte according to claim 1, wherein
   the M is at least one selected from the group consisting of Mg, Ca, Zr, and Al.

3. The solid electrolyte according to claim 1, wherein

the M is Al.

4. The solid electrolyte according to claim 1, wherein
the solid electrolyte has a composition represented by the following formula (1):

$$Li_{6-(4-x)b}(Ti_{1-x}M_x)_bF_6 \qquad \text{Formula (1)}$$

the formula (1) satisfies $0 < x < 1$ and $0 < b \leq 2$.

5. An electrode material comprising:

an active material; and
a coating layer coating at least a portion of a surface of a particle of the active material, wherein
the coating layer comprises the solid electrolyte according to claim 1.

6. A lithium secondary battery comprising:

a positive electrode;
a negative electrode; and
an electrolyte layer disposed between the positive electrode and the negative electrode, wherein
the positive electrode or the negative electrode comprises the electrode material according to claim 5.

7. A method for producing a solid electrolyte, the method comprising:

synthesizing a solid electrolyte comprising Li, Ti, M, and F; and
annealing the solid electrolyte under conditions of 100°C or more and 10 hours or more, wherein
the M is at least one selected from the group consisting of Mg, Ca, Sr, Ba, Sc, Y, Al, Ga, In, Zr, and Sn.

FIG.1

FIG.2

20
30  40

FIG.3

100

56
57  54  55

51  52
53

59
58

FIG.4

200

FIG.5

Pressure

Pressure

FIG.6

EP 4 593 038 A1

FIG.7

FIG.8

14

## INTERNATIONAL SEARCH REPORT

International application No.

**PCT/JP2023/026472**

**A.    CLASSIFICATION OF SUBJECT MATTER**

*H01B 1/06*(2006.01)i; *C01G 23/00*(2006.01)i; *H01M 4/36*(2006.01)i; *H01M 10/052*(2010.01)i
FI:    H01B1/06 A; H01M4/36 C; H01M10/052; C01G23/00 C

According to International Patent Classification (IPC) or to both national classification and IPC

**B.    FIELDS SEARCHED**

Minimum documentation searched (classification system followed by classification symbols)

H01B1/06; C01G23/00; H01M4/36; H01M10/052

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | WO 2021/186833 A1 (PANASONIC INTELLECTUAL PROPERTY MANAGEMENT CO., LTD.) 23 September 2021 (2021-09-23) paragraphs [0018], [0031]-[0035], [0128] | 1-6 |
| X | paragraphs [0018], [0031]-[0035], [0128] | 7 |
| A | WO 2021/186809 A1 (PANASONIC INTELLECTUAL PROPERTY MANAGEMENT CO., LTD.) 23 September 2021 (2021-09-23) paragraphs [0019], [0028]-[0031], [0127] | 1-6 |
| X | paragraphs [0019], [0028]-[0031], [0127] | 7 |
| A | JP 2021-132019 A (NICHIA CORP.) 09 September 2021 (2021-09-09) paragraphs [0042], [0047]-[0053], fig. 4 | 1-6 |
| A | JP 2022-59592 A (TOKYO INSTITUTE OF TECHNOLOGY) 13 April 2022 (2022-04-13) paragraphs [0020], [0021], fig. 6 | 1-6 |

☐ Further documents are listed in the continuation of Box C.    ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **28 September 2023** | **10 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/026472**

| Patent document cited in search report | | | Publication date (day/month/year) | Patent family member(s) | | | Publication date (day/month/year) |
|---|---|---|---|---|---|---|---|
| WO | 2021/186833 | A1 | 23 September 2021 | US | 2023/0013826 | A1 | |
| | | | | paragraphs [0022], [0035]-[0039], [0147] | | | |
| | | | | EP | 4123745 | A1 | |
| | | | | CN | 115244750 | A | |
| WO | 2021/186809 | A1 | 23 September 2021 | US | 2023/0009296 | A1 | |
| | | | | paragraphs [0023], [0032]-[0036], [0147] | | | |
| | | | | EP | 4123746 | A1 | |
| | | | | CN | 115244626 | A | |
| JP | 2021-132019 | A | 09 September 2021 | (Family: none) | | | |
| JP | 2022-59592 | A | 13 April 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021186809 A